# EUROPEAN PATENT APPLICATION

(11) **EP 0 917 006 A2**
(43) Date of publication of application: **19.05.1999**
(21) Application number: 98118094.6
(22) Date of filing: 24.09.1998
(51) Int. Cl.: G03G 15/00

(54) **Input/output model for multifunction user interfaces**

(30) Priority: 17.11.1997 US 971656
(71) Applicant: XEROX CORPORATION, Rochester New York 14644 (US)
(72) Inventor: Colter, Benjamin A., Webster, NY 14580 (US); Hayward, Ken, Brockport, NY 14420 (US); Skrainar, Stephen F., Penfield, NY 14526 (US); Herceg, Thomas J., Pittsford, NY 14534 (US)
(74) Representative: Grünecker, Kinkeldey, Stockmair & Schwanhäusser Anwaltssozietät

(57) **Abstract**

A method of simplifying operator interaction with a multifunction device having an operator interface with display screen by providing a selection of job inputs and job outputs on the operator interface display screen. The operator selects the appropriate job input such as scan paper and retrieve remote files and the appropriate job output such as save to storage and make remote prints. The system responds to the selected job inputs and outputs and provides a set of feature options on a successive display on the display screen associated with the particular combination of job inputs and outputs selected by the operator.

## Description

The present invention is directed to a user interface for a reprographic system. More specifically, the present invention is directed to a user interface which enables the user to select a type of input and a type of output to present the appropriate features for job enablement.

With the advent of reprographic systems having more and more features included for the user to program, different user interfaces have been developed in order to allow the user to program these various features. One such user interface is an interactive electronic display user interface which has multiple levels or multiple screens. The user of such an interface user can navigate through various screens to select the desired user-programmable features or attributes. More specifically, the user may encounter a main copying screen and navigational buttons to get to other screens or layered screens so as to program different features or attributes associated with those navigational buttons.

For example, a main copying screen may have a navigational button associated with the feature of reduction/enlargement. By activating this navigational button, the user interface would display a screen which has a plurality of reduction/enlargement activatable buttons as well as other programmable areas which allow the user to program a variety of reduction/enlargement values.

Other prior art attempts to simplify the user interface in multi-feature machines are disclosed in U.S. Patent Number 5,657,461, assigned to the same assignee as the present inventor. In particular, Patent Number 5,657,461 discloses a user interface to automatically distribute information to a receiver on a network using devices (such as printers and facsimile machines) and communication channels (such as electronic mail) defined in a receiver profile. The receiver profile establishes the properties and mode for receipt of information for receivers on the network and the profile is published in a network repository for all network users or is accessible by selected groups or individuals on the network. In addition, U.S. Patent Number 5,630,079, also assigned to the same assignee as the present inventor, discloses a user interface mechanism called a document key for determining the selections needed to support a given combination of services without the user having to explicitly select a given service. By simply changing document source and document destination characteristics, the user can create new combinations of functionality. In addition, U.S. Patent No. 5,604,860, discloses a method of customizing and storing an interface control for an image machine by entering an interface control customizing mode providing access to a library of control features, selecting a set of control features for use on a given machine, and arranging the set of control features in a given configuration of a scaled representation of an interface control. The set of control features and given configuration is then stored in memory and referenced with a given identifier in order that upon accessing the identifier, the set of control features and given configuration are provided on the interface control display.

However, digital technology and the push towards producing multi-function document processing hardware (eg. Copier/Fax/Printer) is causing an operability crisis for users. Digital technology is enabling an explosion of document services (E-Mail, Filing, OCR, Glyph reading), and manufacturers are attempting to incorporate all of these services into one device. Currently, the industry uses an additive model when incorporating a new service (ie. to add an E-Mail service, you add an E-Mail button to the user interface). As a result, users are being overwhelmed with services, and how to identify/find them, navigate through them and determine their availability. Digital technology is also blurring the line between many of these services, causing user frustration in programming jobs (for example, a user approaches a multi function device with their original on floppy disk and requiring hard copy output. Should the user select Copy service or Print service?)

Although the utilization of a multi-level or multi-screen system allows the user to program a multitude of features for the copying machine while maintaining a compact user interface, the utilization of multi-screens can also cause problems. For example, a typical scheme requires a user to navigate through various levels of the screens to program commonly used features or attributes into the reprographic system. In multifunction machines this difficulty is intensified because there is the need to select features for multiple functions and the initial category of selection may not be apparent. If the operator wants to both scan documents and retrieve files from local memory to be both printed remotely and faxed to a destination as well, the sheer complexity of the job requirement can easily confuse an operator and make it difficult for the operator to start the job requirement in the machine. It may not be possible to eliminate the need to observe progressive displays to encounter all necessary features needed in a job requirement, however, it would be significant for an operator to be presented with an immediate display of the base starting point for setting up a complex job requirement. It would be desirable, therefore, to overcome the above identified difficulties by providing a relatively simple technique for an operator to be presented with an immediate display of only relevant job features related to a complex job requirement.

It is an object of the present invention, therefore, to provide an operator with an Input/Output model rather than the prior art service oriented model to set up a machine for a complex job requirement. It is another object of the present invention to present an operator with an immediate display of the base starting point for setting up a complex job requirement. It is another object of the present invention to present an operator with an immediate display of only relevant job features related to a complex job requirement. Further advantages of the present invention will become apparent as the following description proceeds, and the features characterizing the invention will be pointed out with particularity in the claims annexed to and forming a part of this specification.

### SUMMARY OF THE PRESENT INVENTION

A method of simplifying operator interaction with a multifunction device having an operator interface with display screen by providing a selection of job inputs and job outputs on the operator interface display screen. The operator selects the appropriate job input such as scan paper and retrieve remote files and the appropriate job output such as save to storage and make remote prints. The system responds to the selected job inputs and outputs and provides a set of feature options on a successive display on the display screen associated with the particular combination of job inputs and outputs selected by the operator. Further objects and advantages of the present invention will become apparent from the following description of the various features of the present invention.

The following is a brief description of the drawings used to describe the present invention, and thus, these drawings are being presented for illustrative purposes only and thus should not be limitative of the scope of the present invention, wherein:
Figure 1 is a graphic representation of the architecture of a typical digital reprographic machine;
Figure 2 illustrates a typical prior art service oriented model user interface; and
Figure 3 illustrates an Input/Output model user interface according to the present invention.

The following is a detailed description of the present invention. In this description, the drawings have been utilized to illustrate the concepts of the present invention. In this description as well as in the drawings, like reference numerals indicate the same items or equivalent items.

The present invention is applicable to a typical non-networked and/or network connected digital multi-function machine. Such a machine can include a scanning station, a printing station, and a user interface. The digital multi-function machine may also include a finisher device which may be a sorter, tower mailbox, stapler, etc. The printing station may include a plurality of paper trays that store the paper used in the printing process. Lastly, the digital multi-function machine may include a high capacity feeder which is capable of holding large amounts of paper stock to be used by the machine.

In a typical scanning function, the operator would utilize the scanning station to scan in the images from the original documents. This scanning station may be a platen type scanner or may include a constant velocity transport system which moves the original documents across a stationary scanning device. Moreover, the scanning station may also include a document handling system which is capable of placing the original documents, automatically, on the glass platen for scanning.

With respect to the printing functions, the printing station would retrieve the proper paper from one of the multiple paper trays or the high capacity feeder, render the desired image on the retrieved paper, and output the printed image to the finishing device for further operations.

The user interface allows the user to control the various functions of the digital multi-function machine by presenting various types of screens to the user which provides the user an opportunity to program certain job characteristics or function characteristics.

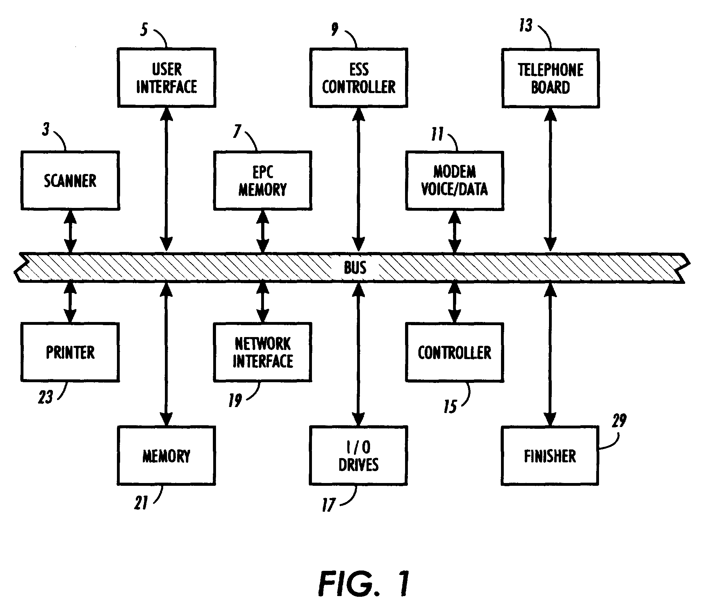

An example of the basic architecture of a digital multi-function machine is illustrated in Figure 1. As illustrated in Figure 1, the architecture of the digital multi-function machine includes a scanner 3 which converts an original image into a set of digital signals that can be either stored or reproduced. The scanner 3 is connected to a central bus system 1 which may be either a single bus or a plurality of buses which provide interconnections and intercommunications between the various modules and devices on a multi-function digital machine.

The digital multi-function machine, as illustrated in Figure 1, further includes a digital printing device 23 which converts digital signals representing an image into a hard copy of that image on a recording medium whether the recording medium be paper, transparency, or other type of markable medium. The digital multi-function machine also includes a memory 21 for storing a variety of types of digital information such as machine fault information, machine history information, digital images to be processed at a later time, instruction sets for the machine, job instruction sets, etc.

In addition to the memory 21, a typical digital multi-function machine includes an electronic pre-collation memory section 7 which may store the digital representation of the image being presently rendered by the digital printing device 23. In the electronic pre-collation memory 7, the digital image is already laid out in its page structure so that it can be readily rendered by the digital printing device 23.

The digital multi-function machine as illustrated in Figure 1, further includes a user interface 5 which allows the user to select the various functions of the multi-function machine, program various job attributes for the particularly selected function, provide other input to the multi-function machine as well as display informational data from the digital multi-function machine.

If the digital multi-function machine is connected to a network, the digital multi-function machine would include a network interface 19 and an electronic subsystem (ESS) controller 9 which would control the interrelationship between the various modules or devices on the digital multi-function machine and the network.

To enable a facsimile function, the digital multi-function machine would include, typically, a voice/data modem 11 and a telephone circuit board 13. Moreover, the digital multi-function machine may include input/output drives 17 such as a floppy disc drive, a CD ROM drive, a tape drive, or other type of drive which can accept a portable memory device.

In some digital multi-function machines, the machine also includes a finisher 29 which can perform certain operations upon the printed output from the printing device 23. Lastly, the digital multi-function machine includes a controller 15 which controls all the functions within the multi-function device so as to coordinate all the interactions between the various modules and devices.

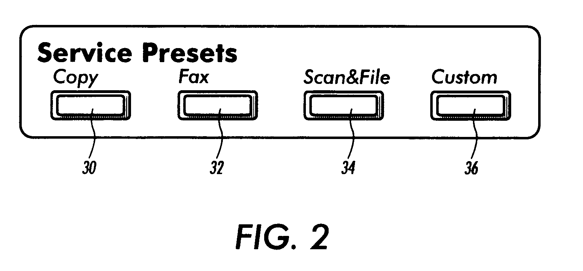

Figure 2 is a very basic illustration of a prior art service model user interface for the machine of Figure 1. In particular, buttons such as Copy 30, Fax 32, Scan & File 34, and Custom 36 machine services are used rather than machine functions. For example, the copy button 30 or copy service represents two distinct functions, a scan function and a print function, in particular a scan input and a print output. The fax button 32 represents the input function of scan plus the output function of send on phone line. Also, as shown in this example, in the service model, the same functions can be repeated across different services.

It has been discovered, however, that a user interface for a complex, multi-function digital device can be simplified by breaking down all services into basic elements. In particular, there are three basic elements a user must provide a machine in order to complete a document transaction, namely, the characteristics of the document in its present form (electronic or paper), the characteristics of the document to be produced (electronic or paper), and the desired locality of the document to be produced. The result is a design broken into Input (the document that I have) and Output (the document that I want to get). Locations were overlaid (where the document is) on the Inputs and Outputs. Locations for electronic Input documents are the fax buffer on the device (Retrieve Fax), the local memory on the device (Retrieve Storage), and memory on the network (Retrieve Network). Locations for sending electronic Output documents are the local device's IOT (Make Prints), another device's IOT (Remote Prints), someone's PC (Send Network), local memory (Save to Storage), and someone's fax machine over a phone line (Send Fax). It is possible for a user to have more than 1 type of Input and to request more than 1 type of Output.

In the future, it will be more efficient to have the Location element separated from the Input and Output elements. The sole reason for this part of the design is to allow users to tell the multi function device their requirements.

Based on the types of job the user wants to accomplish, the machine will then put up the appropriate features and controls. For the user, it is only necessary to specify the nature of the document, and their requirements with the document, and the machine provides a means for completing the requirement.

In accordance with the present invention an Input/Output user interface model solves multi-function operability problems. This model de-couples traditional services such as copy or fax into inputs and outputs (Copy = Scan + Print, Fax = Scan + Send on phone line) (figure 1). Document processing operations like scanning and printing are independent modules which are offered once rather than being offered redundantly across several services. Rather than trying to determine which service to program, users need only specify the kind of original that exists and the kind of output desired. For example, a user who approaches the device with a floppy disk and wants hard copy output needs only to select floppy disk as the input and paper as the output.

The Input/Output model also makes it much simpler to program compound jobs (eg. I have a report to distribute, I need to fax it to a remote office, E-Mail it to an associate, and I need 10 copies to hand out at a meeting). In the Input/Output model, the user need only to select paper as the input and fax send, network send and paper as the outputs. Compound jobs can be performed by selecting 1 or more inputs and 1 or more outputs.

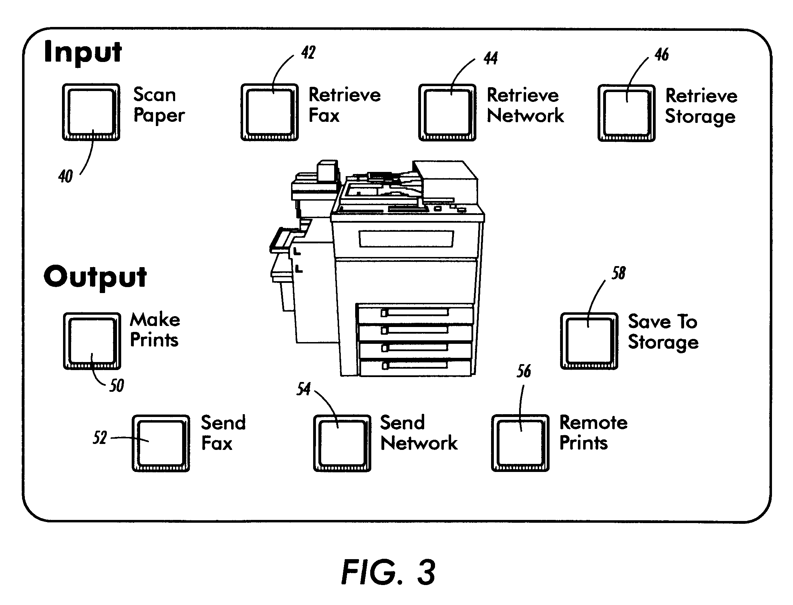

With reference to Figure 3, there is shown a typical Input/ Output model user interface. Typical input functions are scan paper 40, retrieve fax 42, retrieve file from network 44, and retrieve file from storage 46. Typical output functions are make prints 50, send fax 52, send file or document on network 54, make remote prints 56, and save file or document to storage 58. It should be noted that selected input and output functions are used across multiple services. It should be noted also, that the old service oriented model can be retained in the form of Input/Output presets as shown in Figure 2.

The Copy button is a preset of the scanning input and the printing output. Having presets for commonly bundled inputs and outputs (like Copy, Fax and Scan to Print) helps users who are familiar with the service oriented model. Presets also act as a short cut for users familiar with the input/output model. For convenience, there are custom presets that are site settable. If, at a particular site, users often approach the device with a floppy disk to get hard copy output, they can make their "Custom 1" preset bundle the retrieve from floppy input and the print output.

The benefits of Input/Output models are their suitability to Digital/Multi-Function Systems, enabling the combining of inputs and outputs in new ways (ie. creation of new services). Also the I/O model is extensible and robust to adapt to rapidly emerging technologies. It fits with the basic user workflow model and the "life cycle of the document". It's basic conceptual model discloses a high order process to enhance user understanding of the system ("glass box" vs. "black box"). It also gives direct access to required features within an extensive Multi-Function feature set and there is less dialog to navigate through.

While the present invention has been described with reference to various embodiments as described above, it is not confined to the details set forth above, but is intended to cover such modifications or changes as may come within the scope to the attached claims.

## Claims

1. In a multi-functional device having an operator interface with display screen and providing a plurality of services including scanning, copying, printing, and facsimile, a method of simplifying operator interaction with the device comprising the steps of:
providing a selection of job inputs on the operator interface display screen such as scan paper and retrieve files,
providing a selection of job outputs on the operator interface display screen such as make prints, save to storage, an send on network,
selecting by the operator at least one of the job inputs and one of the job outputs, and
responsive to a particular combination of job inputs and outputs selected by the operator, providing a set of feature options on a successive display on the display screen associated with the particular combination of job inputs and outputs selected by the operator.

2. The method of claim 1 including the step of selecting given feature options on the successive display to initiate device operation.

3. The method of claim 1 wherein the step of selecting given feature options on the successive display includes the step of providing additional feature displays for selection to initiate device operation.

4. The method of claim 1 wherein the selection of job inputs includes retrieve fax, retrieve network files, and retrieve local storage files.

5. The method of claim 1 wherein the selection of job outputs includes send fax and make remote prints.

6. The method of claim 1 wherein the step of selecting by the operator at least one of the job inputs and one of the job outputs includes the step of selecting multiple job inputs and multiple job outputs.

7. An operator interface with display screen in a multi-functional device, comprising
a first set of job inputs on the operator interface display screen,
a second set of job outputs on the operator interface display screen,
a selector for the operator to select at least one of the job inputs and one of the job outputs, and
a screen display responsive to a particular combination of job inputs and outputs selected by the operator providing a set of feature options associated with the particular combination of job inputs and outputs selected by the operator.

8. The interface of claim 7 wherein the feature options on the screen display are engaged to initiate device operation.

9. The interface of claim 7 wherein the selection of job inputs includes scan paper, retrieve network files, and retrieve local storage files.

10. The interface of claim 7 wherein the selection of job outputs includes make prints, save to storage, and make remote prints.
